# EUROPEAN PATENT APPLICATION

(11) **EP 1 612 397 A2**
(43) Date of publication of application: **04.01.2006**
(21) Application number: 05253656.2
(22) Date of filing: 14.06.2005
(51) Int. Cl.: F02M 37/22

(54) **Diesel fuel filter**

(30) Priority: 02.07.2004 JP 2004196395
(71) Applicant: Toyota Jidosha Kabushiki Kaisha, Toyota-shi, Aichi-ken 471-8571 (JP)
(72) Inventor: Ikeda, Akihiro, Toyota-shi Aichi-ken 471-8571 (JP); Kawara, Hiroyuki, Toyota-shi Aichi-ken 471-8571 (JP); Fujii, Manabu, Toyota-shi Aichi-ken 471-8571 (JP)
(74) Representative: Smith, Samuel Leonard

(57) **Abstract**

A diesel fuel filter (7) has a fuel recirculation passage (5) where a recirculation valve (8) and a one-way valve (9) are provided in a disposition order of the one-way valve (9) and the recirculation valve (8) in a direction of flow of recirculation fuel in the recirculation passage (5). Due to the disposition, blockage of a fuel element (11) by a wax when the fuel temperature is low is prevented.

## Description

### BACKGROUND OF THE INVENTION

### 1. Field of the Invention

The present invention relates to a diesel fuel filter (a fuel filter for a diesel engine). More particularly, the present invention relates to a diesel fuel filter which can prevent blockage of a fuel filter element due to a fuel wax.

### 2. Description of Related Art

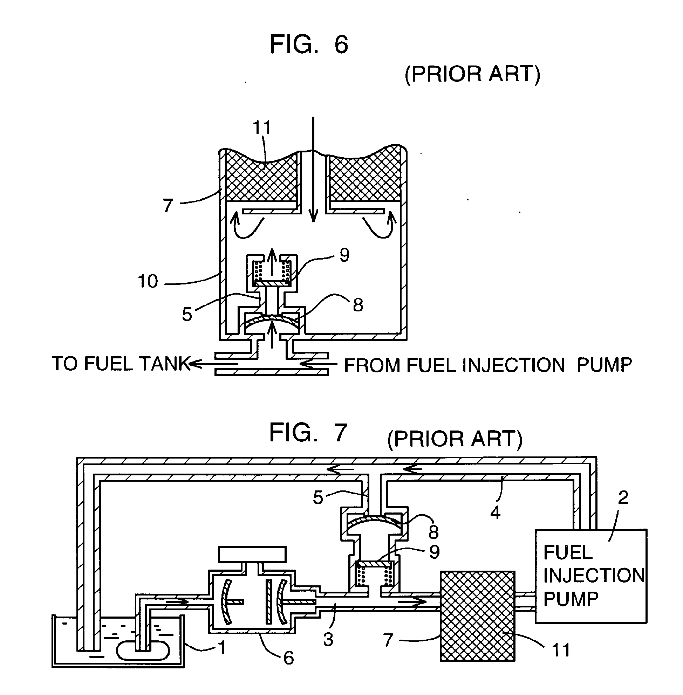

Japanese Patent Publication No. 2002-256995 discloses a diesel fuel passage including a diesel fuel filter as illustrated in FIG. 7. The diesel fuel passage includes a fuel supply passage 3 for use in supplying fuel from a fuel tank 1 to a fuel injection pump 2, a fuel return passage 4 for use in returning fuel from the fuel injection pump 2 to the fuel tank 1, and a fuel recirculation passage 5 for use in recirculating the fuel from the fuel return passage 4 to the fuel supply passage 3. In the fuel supply passage 3, a fuel pumping pump 6 and a fuel filter 7 for use in filtering foreign substances contained in fuel are provided. In the fuel recirculation passage 5, a recirculation valve 8 and a one-way valve 9 are disposed in an order of the recirculation valve 8 and the one-way valve 9 in a direction of flow of recirculation fuel.

Japanese Patent Publication No. 2003-293884 discloses a fuel filter 7 as illustrated in FIG. 6. The fuel filter 7 includes a housing 10 in which a filter element 11, at least a portion of a fuel recirculation passage 5, a recirculation valve 8 and a one-way valve 9 are provided in that order. A passage of flow of the fuel is the same as that of FIG 7.

In each of the fuel passage of FIG. 7 and the fuel filter 7 of FIG 6, the recirculation valve 8 of a bimetal-type detects a fuel temperature and opens when the fuel temperature is relatively low so that a warmed fuel flowing through the fuel return passage 4 is recirculated to the fuel supply passage 3. As a result, the temperature of the fuel flowing in the fuel supply passage 3 is raised, so that a wax which has been captured by a filter element 11 is melted and blockage of the filter element 11 due to the wax is prevented. When the fuel temperature becomes relatively high, the recirculation valve 8 is closed, so that an entire amount of the fuel flowing in the fuel return passage 4 returns to the fuel tank 1. While these are repeated, a temperature of the fuel system rises and becomes stable and the recirculation valve 8 is closed whereby warming of the supply fuel by the return fuel is off.

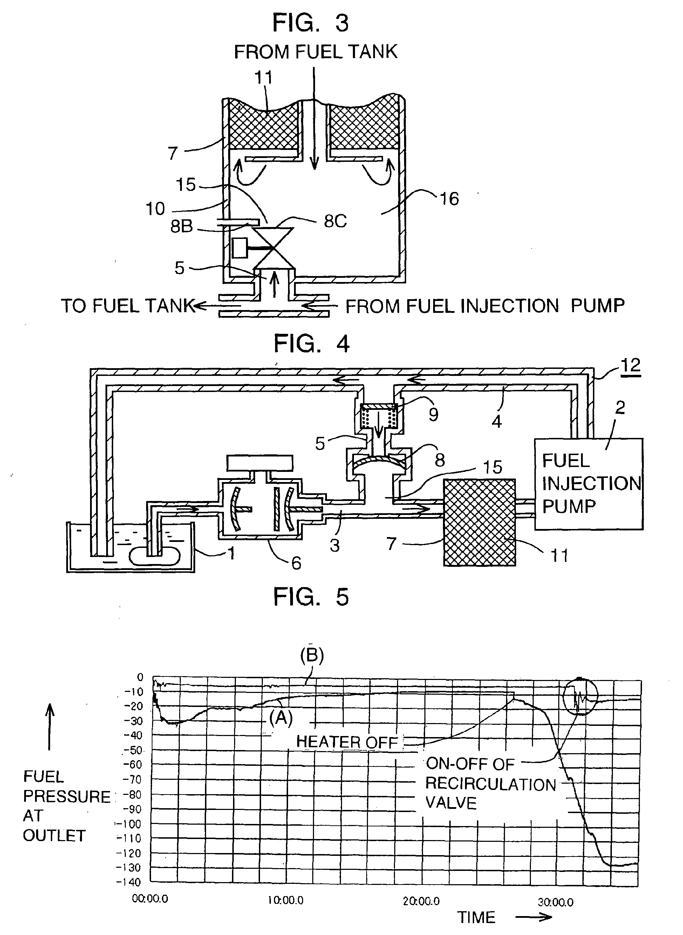

However, with the above-described diesel filter and the fuel passage including the diesel filter, since the recirculation valve 8 is disposed upstream of the one-way valve 9 in the direction of flow of the recirculation fuel, a warmed fuel remains in a hatched portion of the recirculation passage 5 of FIG. 6 (between the one-way valve 9 and the recirculation valve 8) after the recirculation valve 8 is closed and when the one-way valve 9 continues to be closed. As a result, when the fuel of a low temperature and including a wax flows from the fuel tank 1 into the housing 10, the fuel flows to the filter element 11 without contacting the recirculation valve 8 so that the recirculation valve 8 does not open in a short time period. Further, since the recirculation valve 8 communicates with the warmed fuel in the fuel return passage 4, the recirculation valve 8 is unlikely to be open. Accordingly, opening and closing of the recirculation valve 8 cannot follow a change of the temperature of the fuel in the fuel filter 7 with a good response. As a result, after the recirculation valve 8 is closed, the filter element 11 is blocked by a wax, and a negative pressure of the filter at an outlet of the filter is increased (causing a high negative pressure as illustrated by characteristic A in FIG. 5), so that running of the vehicle becomes unstable.

### SUMMARY OF THE INVENTION

An object of the invention is to provide a diesel fuel filter which can prevent blockage of a filter element by a fuel wax when a temperature of fuel is low.

The above object can be attained by the following diesel fuel filter according to the present invention:
(1) The diesel fuel filter according to the present invention includes a fuel recirculation passage for use in recirculating fuel, a recirculation valve and a one-way valve provided in the fuel recirculation passage. The recirculation valve and the one-way valve are arranged in an order of the one-way valve and the recirculation valve in a direction of flow of recirculation fuel. In other words, the recirculation valve is positioned beyond the one-way valve in the direction of flow of recirculation fuel.
(2) The diesel fuel filter of item (1) above further includes at least a portion of a fuel supply passage for use in supplying fuel from a fuel tank to a fuel injection pump. A first, downstream end of the fuel recirculation passage in a direction of flow of the recirculation fuel communicates with the at least a portion of the fuel supply passage, and a second, upstream end of the fuel recirculation passage in a direction of flow of the recirculation fuel communicates with a fuel return passage for use in returning the fuel from the fuel injection pump to the fuel tank.
(3) The diesel fuel filter of item (1) above further includes a housing, a filter element disposed in the housing, and a space formed in the housing and below the filter element. At least a portion of the fuel recirculation passage is disposed in the space.
(4) The diesel fuel filter of item (3) above further includes at least a portion of a fuel supply passage extending from a fuel tank to a fuel injection pump. A first, downstream end of the fuel recirculation passage in a direction of flow of the recirculation fuel communicates with the at least a portion of the fuel supply passage at the space, and a second, upstream end of the fuel recirculation passage in a direction of flow of the recirculation fuel communicates with a fuel return passage extending from the fuel injection pump to the fuel tank.
(5) The one-way valve is a valve which allows fuel to flow only in a direction from the fuel return passage to the fuel supply passage through the fuel recirculation passage.
(6) The recirculation valve is constructed from a bimetal valve. The bimetal valve bends in a first direction to open the fuel recirculation passage when a temperature of fuel which the bimetal valve contacts is equal to or lower than a wax melting temperature. The bimetal valve bends in a second, opposite direction to close the fuel recirculation passage when a temperature of fuel which the bimetal valve contacts is higher than the wax melting temperature.
(7) The recirculation valve is constructed from a solenoid valve and a fuel temperature sensor which are combined such that the solenoid valve is open when the fuel temperature sensor detects that a temperature of fuel in the fuel supply passage is equal to or lower than a wax melting temperature, and the solenoid valve is closed when the fuel temperature sensor detects that the temperature of fuel in the fuel supply passage is higher than the wax melting temperature.

With the diesel fuel filter according to any one of items (1) - (7) above, since the recirculation valve and the one-way valve are arranged in the order of the one-way valve and the recirculation valve in the direction of flow of recirculation fuel, the recirculation valve is located downstream of the one-way valve (i.e., on the side closer to the fuel supply passage), so that the recirculation valve can always contact the fuel (i.e., the supply-side fuel) in the diesel fuel filter even after the recirculation valve is closed, and the recirculation valve can follow a change of a temperature of the supply-side fuel with a good response. As a result, after the recirculation valve is closed and when the supply-side fuel is low in temperature, the recirculation valve opens in a short time period detecting the fuel temperature, thereby allowing the recirculation fuel to flow through the fuel recirculation passage and raising the temperature of the supply-side fuel to melt the wax in the fuel and to prevent blockage of the filter element by the wax.

### BRIEF DESCRIPTION OF THE DRAWINGS

The above and other objects, features, and advantages of the present invention will become apparent and will be more readily appreciated from the following detailed description of the preferred embodiments of the present invention in conjunction with the accompanying drawing, in which:
FIG. 1 is a schematic cross-sectional view of a portion of a diesel fuel filter in the vicinity of a recirculation valve according to a first embodiment of the present invention;
FIG. 2 is a cross-sectional view of a diesel fuel filter according to the first embodiment of the present invention;
FIG**.** 3 is a schematic cross-sectional view of a portion of a diesel fuel filter in the vicinity of a recirculation valve according to a second embodiment of the present invention;
FIG. 4 is a system diagram of a fuel passage including the diesel fuel filter according to the present invention;
FIG. 5 is a graph illustrating a test result at a low fuel temperature (a fuel pressure at an outlet of the diesel fuel filter versus a lapse of time), of the fuel passage including the diesel fuel filter according to the present invention and of a conventional fuel passage including a conventional diesel fuel filter;
FIG. 6 is a schematic cross-sectional view of a portion of the conventional diesel fuel filter in the vicinity of a recirculation valve; and
FIG. 7 is a system diagram of a fuel passage including the conventional diesel fuel filter.

### DETAILED DESCRIPTION OF THE PREFERRED EMBODIMENTS

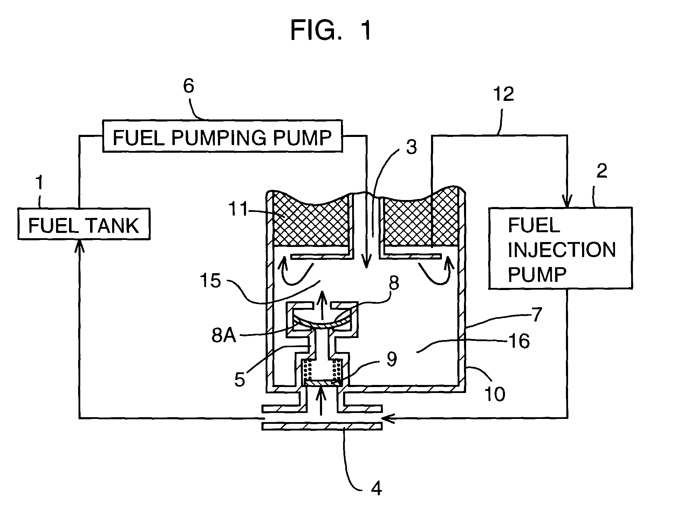

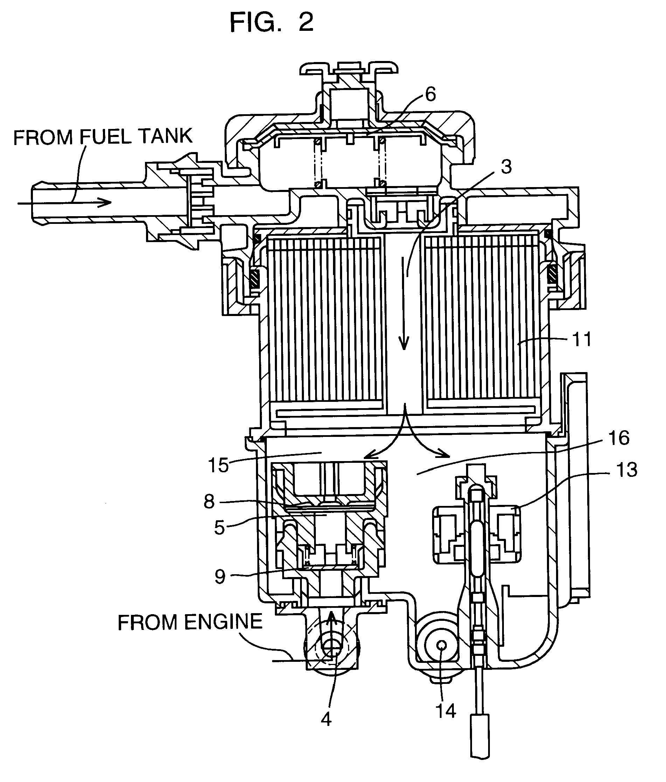

A diesel fuel filter according to the present invention will be explained with reference to FIGs. 1-5. FIGs. 1 and 2 illustrate a diesel fuel filter according to a first embodiment of the invention, and FIG 3 illustrates a diesel fuel filter according to a second embodiment of the invention. FIG 4 illustrates a fuel passage including the diesel fuel filter according to the present invention.

The same elements of the fuel filter of the present invention in FIGs. 1-5 as those of the conventional fuel filter in FIGs. 6 and 7 are denoted with the same reference numerals of those of the conventional fuel filter of FIGs. 6 and 7.

A diesel fuel filter 7 according to the present invention is provided in a fuel passage 12. As illustrated in FIG 4, the fuel passage 12 includes a fuel supply passage 3 for use in supplying fuel (diesel fuel) from a fuel tank 1 to a fuel injection pump 2, a fuel return passage 4 for use in returning the fuel from the fuel injection pump 2 to the fuel tank 1, and a fuel recirculation passage 5 for use in recirculating the fuel from the fuel return passage 4 to the fuel supply passage 3.

In the fuel supply passage 3, a fuel pumping pump 6 and a filter element 11 of the fuel filter 7 for use in filtering foreign substances contained in fuel are provided. The fuel recirculation passage 5 allows fuel to be recirculated therethrough from the fuel return passage 4 to a portion of the fuel supply passage 3 between the fuel pumping pump 6 and the filter element 11 of the fuel filter 7 (a converging point 15). A direction of flow of the supplied fuel flowing in the fuel supply passage 3 is a direction from the fuel tank 1 to the fuel injection pump 2, and a direction of flow of the returned fuel flowing in the fuel return passage 4 is a direction from the fuel injection pump 2 to the fuel tank 1. A direction of flow of the recirculation fuel flowing in the fuel recirculation passage 5 is a direction from the fuel return passage 4 to the fuel supply passage 3. In the fuel recirculation passage 5, a recirculation valve 8 and a one-way valve 9 are disposed.

As illustrated in FIGs. 1-3, the diesel fuel filter 7 according to the present invention includes at least a portion of the fuel recirculation passage 5. In the at least a portion of the fuel recirculation passage 5, the recirculation valve 8 and the one-way valve 9 are disposed in an order of the recirculation valve 8 and the one-way valve 9 in the direction of flow of recirculation fuel. The disposition order of the recirculation valve 8 and the one-way valve 9 in the direction of flow of recirculation fuel of the present invention is reverse to the disposition order of the one-way valve 9 and the recirculation valve 8 in the direction of flow of recirculation fuel of the conventional diesel fuel filter.

The diesel filter 7 further includes at least a portion of the fuel supply passage 3 for use in supplying the fuel from the fuel tank 1 to the fuel injection pump 2. A downstream end of the fuel recirculation passage 5 in the direction of flow of the recirculation fuel communicates with the at least a portion of the fuel supply passage 3. An upstream end of the fuel recirculation passage 5 in the direction of flow of the recirculation fuel communicates with the fuel return passage 4 from the fuel injection pump 2 to the fuel tank 1.

The diesel fuel filter 7 further includes a housing 10, the filter element 11 disposed within the housing 10, and a space 16 formed in the housing 10 and below the filter element 11.

The at least a portion of the fuel recirculation passage 5 is disposed in the space 16. The downstream end of the fuel recirculation passage 5 in the direction of flow of the recirculation fuel communicates with a portion between the fuel pumping pump 6 and the filter element 11 of the fuel supply passage 3 at the converging point 15 in the space 16. In the space 16, a passage wall of the fuel recirculation passage 5 is disposed, and in the passage wall, the recirculation valve 8 and the one-way valve 9 are disposed.

The recirculation valve 8 is a valve which opens when a temperature of the fuel flowing in the fuel supply passage 3 is equal to or lower than a wax melting temperature, and which is closed when the temperature of the fuel flowing in the fuel supply passage 3 is higher than the wax melting temperature. When the recirculation valve 8 is open, the recirculation valve 8 allows a portion of the warmed fuel to be recirculated through the fuel recirculation passage 5 to the fuel supply passage 3 and to be mixed with the supply fuel of a low temperature thereby raising the temperature of the supply fuel at a portion of the fuel supply passage 3 upstream of the filter element 11 to melt the wax and preventing blockage of the filter element 11 due to the wax. When the recirculation valve 8 is closed, an entire portion of the warmed return fuel is returned to the fuel tank 1.

The one-way valve 9 allows the fuel to flow only in a direction from the fuel return passage 4 to the fuel supply passage 3 through the fuel recirculation passage 5. The one-way valve 9 prevents the fuel from flowing in a reverse direction.

The filter element 11 captures foreign substances and dusts contained in the fuel. When the fuel temperature is low and a wax is generated in the fuel, there is a fear that the wax is captured by the filter element 11 to block the filter element. However, in the present invention, since the recirculation valve 8 is open, there will not happen such a blockage of the filter element 11 due to the wax.

The fuel pumping pump 6 is a pump to suck fuel to a position of the diesel filter 7 when the fuel system is filled with fuel. Once the fuel system has been filled with fuel, the pump 6 is not used.

The diesel fuel filter 7 may be provided with a detector 13 (a float) for detecting water in a case where the fuel contains water and a drain portion 14 for draining the water to a drain pipe.

In a first embodiment of the present invention, as illustrated in FIGs. 1 and 2, the recirculation valve 8 is constructed from a bimetal valve 8A. The bimetal valve 8A bends in a first direction to open the fuel recirculation passage 5 when a temperature of fuel which the bimetal valve contacts is equal to or lower than the wax melting temperature. The bimetal valve bends in a second, opposite direction to close the fuel recirculation passage 5 when the temperature of fuel which the bimetal valve contacts is higher than the wax melting temperature. However, the recirculation valve 8 should not be limited to the bimetal valve.

In a second embodiment of the present invention, the recirculation valve 8 is constructed from a solenoid valve 8C and a fuel temperature sensor 8B. The solenoid valve 8C and the fuel temperature sensor 8B are combined such that the solenoid valve 8C is open when the fuel temperature sensor 8B detects that the temperature of fuel in the fuel supply passage 3 is equal to or lower than the wax melting temperature, and the solenoid valve 8C is closed when the fuel temperature sensor 8B detects that the temperature of fuel in the fuel supply passage 3 is higher than the wax melting temperature.

Technical advantages of the present invention will now be explained.

In the diesel fuel filter 7 and the fuel passage including the diesel fuel filter 7, since the recirculation valve 8 and the one-way valve 9 are arranged in the fuel recirculation passage 5 in the order of the one-way valve 9 and the recirculation valve 8 in the direction of flow of recirculation fuel, the recirculation valve 8 can always contact the fuel (i.e., the supply-side fuel) in the diesel fuel filter 7 even after the recirculation valve 8 is closed, and the recirculation valve 8 can follow a change of a temperature of the supply-side fuel with a good response. Further, since the one-way valve 9 is positioned between the recirculation valve 8 and the fuel return passage 4, when the recirculation valve 8 is closed and the recirculation fuel does not flow in the recirculation passage 5, the recirculation valve 8 does not contact the warmed fuel flowing in the fuel return passage 4 and is not affected by the warmed fuel. As a result, after the recirculation valve 8 is closed and when the supply-side fuel is low in temperature, the recirculation valve 8 opens in a short time period detecting the fuel temperature, thereby allowing the recirculation fuel to flow through the fuel recirculation passage 5 and raising the temperature of the supply-side fuel to melt the wax in the fuel and to prevent blockage of the filter element 11 by the wax.

With the conventional diesel fuel filter of FIGs. 6 and 7, since the recirculation valve 8 and the one-way valve 9 are disposed in the fuel recirculation passage 5 in the order of the recirculation valve 8 and the one-way valve 9 in the direction of flow of the recirculation fuel, when the recirculation valve 8 is closed, warmed fuel remains between the recirculation valve 8 and the one-way valve 9. As a result, the recirculation valve 8 is unlikely to respond to the supply-side fuel of a low temperature, and a considerably long time period is required for the temperature of the fuel around the recirculation valve 8 to be low through thermal conduction through the wall of the fuel recirculation passage 5 whereby the recirculation valve 8 is open. This means that the response of the recirculation valve for opening is slow and a considerable long time period is necessary for the supply-side fuel to rise in temperature. As a result, wax is generated in the supply-side fuel which will cause blockage of the filter element 11. Once the blockage happens, the negative pressure of the filter element 11 becomes high accompanied by an unstable running of the vehicle.

In contrast, in the present invention, since the recirculation valve 8 and the one-way valve 9 are disposed in the fuel recirculation passage 5 in the order of the one-way valve 9 and the recirculation valve 8 in the direction of flow of the recirculation fuel, even after the recirculation valve 8 is closed, the recirculation valve 8 can contact the supply-side fuel and can respond to a change of the temperature of the supply-side fuel. As a result, when the supply-side fuel is or becomes low in temperature, the recirculation valve 8 opens at once thereby raising the temperature of the supply-side fuel in a short time period, so that an unstable running is unlikely to happen.

FIG. 5 illustrates test results (a relationship between a pressure at the outlet of the filter and an elapsed time) at the 40km/h, of the conventional diesel fuel filter of FIGs. 6 and 7 and the diesel fuel filter of the present invention.

In the conventional filter, as illustrated in FIG. 5 by characteristic A, after the recirculation valve 8 is closed, the filter element 11 is blocked by wax, and the negative pressure at the outlet of the filter becomes a high negative pressure, whereby running becomes incapable.

In contrast, in the present invention, as illustrated in FIG. 5 by characteristic B, even after the recirculation valve 8 is closed, the recirculation valve 8 well responds to a change of the temperature of the supply-side fuel, and on and off of the recirculation valve 8 is repeated whereby the vehicle runs smoothly.

## Claims

1. A diesel fuel filter (7) including a fuel recirculation passage (5) for use in recirculating fuel, a recirculation valve (8) and a one-way valve (9) provided in said fuel recirculation passage (5), **characterized in that** said recirculation valve (8) and said one-way valve (9) are arranged in an order of said one-way valve (9) and said recirculation valve (8) in a direction of flow of recirculation fuel.

2. A diesel fuel filter (7) according to claim 1, further including at least a portion of a fuel supply passage (3) for use in supplying fuel from a fuel tank (1) to a fuel injection pump (2), and wherein a first, downstream end of said fuel recirculation passage (5) in a direction of flow of the recirculation fuel communicates with said at least a portion of said fuel supply passage (3), and a second, upstream end of said fuel recirculation passage (5) in a direction of flow of the recirculation fuel communicates with a fuel return passage (4) for use in returning the fuel from said fuel injection pump (2) to said fuel tank (1).

3. A diesel fuel filter (7) according to claim 1, further including a housing (10), a filter element (11) disposed in said housing (10), and a space (16) formed in said housing (10) and below said filter element (11), and wherein at least a portion of said fuel recirculation passage (5) is disposed in said space (16).

4. A diesel fuel filter (7) according to claim 3, further including at least a portion of a fuel supply passage (3) extending from a fuel tank (1) to a fuel injection pump (2), and wherein a first, downstream end of said fuel recirculation passage (5) in a direction of flow of the recirculation fuel communicates with said at least a portion of said fuel supply passage (3) at said space (16), and a second, upstream end of said fuel recirculation passage (5) in a direction of flow of the recirculation fuel communicates with a fuel return passage (4) extending from said fuel injection pump (2) to said fuel tank (1).

5. A diesel fuel filter (7) according to any preceding claim, wherein said one-way valve (9) is a valve which allows fuel to flow only in a direction from said fuel return passage (4) to said fuel supply passage (3) through said fuel recirculation passage (5).

6. A diesel fuel filter (7) according to any preceding claim, wherein said recirculation valve (8) is constructed from a bimetal valve which bends in a first direction to open said fuel recirculation passage (5) when a temperature of fuel which said bimetal valve contacts is equal to or lower than a wax melting temperature, and which bends in a second, opposite direction to close said fuel recirculation passage (5) when a temperature of fuel which said bimetal valve contacts is higher than the wax melting temperature.

7. A diesel fuel filter (7) according to any one of claims 1 to 5, wherein said recirculation valve (8) is constructed from a solenoid valve (8C) and a fuel temperature sensor (8B) which are combined such that said solenoid valve (8C) is open when said fuel temperature sensor (8B) detects that a temperature of fuel in said fuel supply passage (3) is equal to or lower than a wax melting temperature, and said solenoid valve (8C) is closed when said fuel temperature sensor (8B) detects that the temperature of fuel in said fuel supply passage (3) is higher than the wax melting temperature.
